# EUROPÄISCHE PATENTSCHRIFT

(11) **EP 1 891 161 B1**
(45) Veröffentlichungstag und Bekanntmachung des Hinweises auf die Patenterteilung: **31.10.2012**
(21) Anmeldenummer: 06763270.3
(22) Anmeldetag: 24.05.2006
(51) Int. Cl.: C09B 62/45

(54) **REAKTIVFARBSTOFFE, VERFAHREN ZU DEREN HERSTELLUNG UND IHRE VERWENDUNG**
REACTIVE DYESTUFFS, METHOD FOR THE PRODUCTION THEREOF AND USE OF THE SAME
COLORANTS REACTIFS, PROCEDE DE PRODUCTION DE CES COLORANTS ET LEUR UTILISATION

(30) Priorität: 30.05.2005 DE 102005025010
(43) Veröffentlichungstag der Anmeldung: 27.02.2008
(73) Patentinhaber: DyStar Colours Distribution GmbH, 65926 Frankfurt am Main (DE)
(72) Erfinder: MEIER, Stefan, 60529 Frankfurt (DE); REIHER, Uwe, 65719 Hofheim (DE); RUSS, Werner, 65439 Flörsheim-Wicker (DE); SCHWAIGER, Günther, 65929 Frankfurt am Main (DE)
(86) Internationale Anmeldenummer: PCT/EP2006/062581
(87) Internationale Veröffentlichungsnummer: WO 2006/128822

(56) Entgegenhaltungen:
- EP-A1- 0 567 036
- EP-A2- 0 056 975
- DE-A1- 4 138 084
- DE-A1- 4 425 222
- GB-A- 2 250 297

## Beschreibung

Die Erfindung liegt auf dem technischen Gebiet der faserreaktiven Azofarbstoffe.

Aus der Praxis des Färbens mit faserreaktiven Farbstoffen ergeben sich erhöhte Anforderungen an die Qualität der Färbungen und an die Wirtschaftlichkeit der Färbeprozesse. Infolgedessen besteht weiterhin Bedarf nach neuen faserreaktiven . Farbstoffen, die verbesserte Eigenschaften besitzen. Insbesondere bei Farbstoffen mit gelber Nuance sind Reaktivfarbstoffe gefragt, die hohe Farbstärken liefern.

In der Literatur sind zahlreiche faserreaktive Farbstoffe beschrieben, die sich zum Färben oder Bedrucken von hydroxy- und/oder carbonamidgruppenhaltigen Fasern, wie insbesondere Cellulosefasern, zur Erzeugung von gelben Färbungen eignen.
Von diesen Farbstoffen sind insbesondere diejenigen von technischem Interesse, die aus DE 29 27 102 A, DE 31 02 287, sowie EP 0 021 105 A1 bekannt sind. Diese herkömmlichen gelbfärbenden Farbstoffe genügen jedoch nicht in ausreichendem Umfang den neuesten Anforderungen, beispielsweise ihre Verwendung in speziellen Färbeverfahren, die Färbbarkeit der Fasern und die Echtheitseigenschaften der mit ihnen erhältlichen Färbungen betreffend.

Gelbfärbende faserreaktive Farbstoffe sind außerdem in der EP 0 567 036 A1 beschrieben, die jedoch die angegebenen Kriterien ebenfalls nicht ausreichend erfüllen. Insbesondere ist die Farbstärke dieser Produkte auf Cellulosefasern nicht zufriedenstellend.

Mit der vorliegenden Erfindung werden nun Farbstoffe und Farbstoffmischungen bereit gestellt, deren Färbungen im vergleich zu den in EP 0 567 036 A1 beschriebenen Farbstoffen überraschenderweise eine deutlich höhere Farbstärke aufweisen.

Vorliegende Erfindung betrifft somit Farbstoffe der allgemeinen Formel (1) 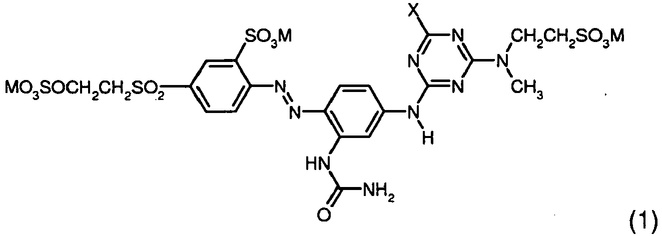 worin
- M: Wasserstoff oder ein Alkalimetall und
- X: Chlor oder Fluor bedeuten.

Die vorliegende Erfindung betrifft außerdem Farbstoffmischungen, enthaltend einen oder mehrere der Farbstoffe der allgemeinen Formel (1), sowie einen oder mehrere weitere faserreaktive Farbstoffe.

Bevorzugte erfindungsgemäße Farbstoffmischungen enthalten einen oder mehrere der Farbstoffe der allgemeinen Formel (1), sowie mindestens einen Farbstoff, der aus den allgemeinen Formeln (2), (3) und (4) ausgewählt ist 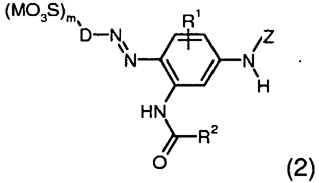 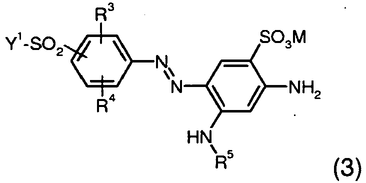 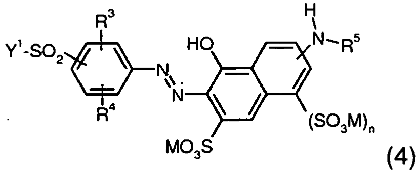 worin
- D: für den Rest des Benzols oder Naphthalins steht;
- R¹: Wasserstoff, (C₁-C₄)-Alkyl, (C₁-C₄)-Alkoxy oder -SO₃M bedeutet;
- R²: Amino, (C₁-C₄)-Alkyl oder durch -COOM, -SO₃M oder -SO₂-Y¹ substituiertes (C₁-C₄)-Alkyl bedeutet;
- R³: Wasserstoff, Chlor, (C₁-C₄)-Alkyl, (C₁-C₄)-Alkoxy oder -SO₃M bedeutet;
- R⁴: Wasserstoff, (C₁-C₄)-Alkyl oder (C₁-C₄)-Alkoxy bedeutet;
- R⁵: Wasserstoff oder -CO-R² bedeutet oder eine der Bedeutungen von Z hat;
- Y¹: für Vinyl oder Ethyl, das in ß-Stellung durch einen alkalisch eliminierbaren Substituenten substituiert ist, steht;
- Z: für einen faserreaktiven Rest aus der Reihe der Halogenpyrimidine, der Dichlorchinoxaline oder der Halogentriazine steht;
- m: für 1, 2 oder 3 steht;
- n: für 0 oder 1 steht; und
- M: wie oben angegeben definiert ist.

In den allgemeinen Formeln (1) bis (4) bedeutet ein für M stehendes Alkalimetall bevorzugt Natrium, Kalium oder Lithium.
(C₁-C₄)-Alkyl-Gruppen können geradkettig oder verzweigt sein und bedeuten beispielsweise Methyl, Ethyl, n-Propyl, i-Propyl, n-Butyl, i-Butyl, sek.-Butyl oder tert.-Butyl. Besonders bevorzugt sind Methyl und Ethyl. Analoges gilt für (C₁-C₄)-Alkoxy-Gruppen, die demnach besonders bevorzugt für Methoxy oder Ethoxy stehen.

Der Substituent R¹ ist bevorzugt Wasserstoff, Methyl oder Methoxy. Der Substituent R² ist bevorzugt Methyl oder Amino. Der Substituent R³ ist bevorzugt Wasserstoff, Methyl, Methoxy oder Chlor. Der Substituent R⁴ ist bevorzugt Wasserstoff, Methyl oder Methoxy.

Alkalisch eliminierbare Substituenten in ß-Stellung einer für Y¹ stehenden Ethyl-Gruppe sind insbesondere Chlor, Sulfato, Thiosulfato, Phosphato, (C₂-C₅)-Alkanoyl-oxy, wie beispielsweise Acetyloxy, und Sulfobenzoyloxy. Besonders bevorzugt steht Y¹ für Vinyl oder ß-Sulfatoethyl.
Die Gruppen "Sulfato", "Thiosulfato" und "Phosphato" schließen sowohl deren Säureform als auch deren Salzform ein. Demgemäß entsprechen Thiosulfatogruppen der allgemeinen Formel -S-SO₃M, Phosphatogruppen der allgemeinen Formel -OPO₃M₂ und Sulfatogruppen der allgemeinen Formel -OSO₃M, in welchen M die obengenannte Bedeutung besitzt.

Für die Gruppe (MO₃S)ₘ-D- in der allgemeinen Formel (2) steht bevorzugt eine Gruppe der allgemeinen Formel (5), (6) oder (7) 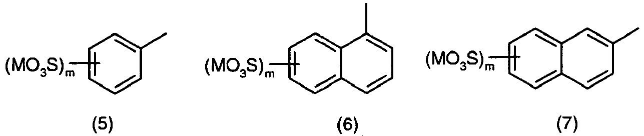 worin M und m wie oben angegeben definiert sind.

Besonders bevorzugt stehen für die Gruppe (MO₃S)ₘ-D- in der allgemeinen Formel (2) die Gruppen der allgemeinen Formeln (5a) bis (5c), sowie der allgemeinen Formeln (7a) bis (7e)

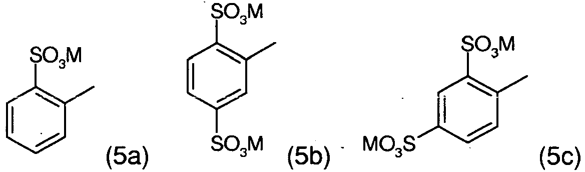

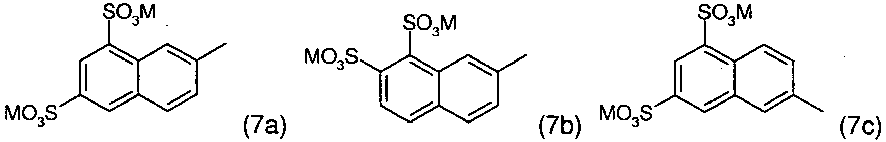

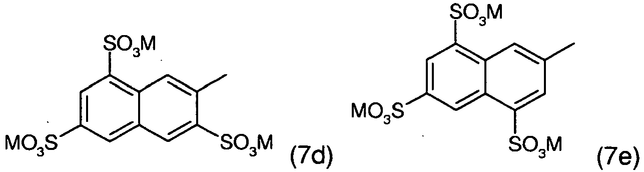

Für Z stehende faserreaktiven Reste aus der Reihe der Halogenpyrimidine haben insbesondere die allgemeine Formel (8) 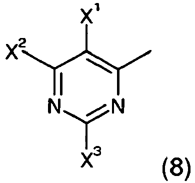 worin X¹ bis X³ unabhängig voneinander Wasserstoff, Cyano oder Halogen, wie insbesondere Fluor oder Chlor, bedeuten, wobei mindestens einer der Reste X¹ bis X³ für Halogen steht.

Besonders bevorzugte faserreaktiven Reste aus der Reihe der Halogenpyrimidine haben die nachfolgenden Formeln (8a) bis (9g)

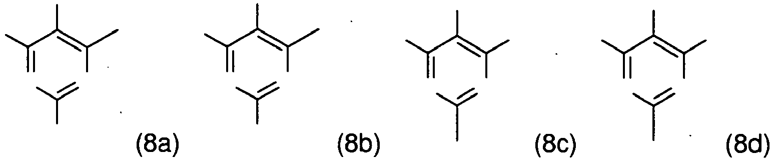

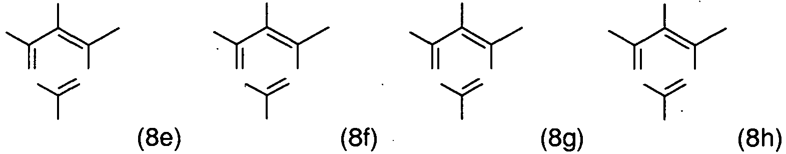

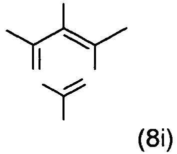

Für Z stehende faserreaktiven Reste aus der Reihe der Halogentriazine haben insbesondere die allgemeine Formel (9) 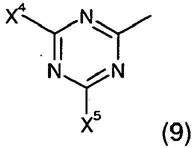 worin
X⁴ Halogen, wie insbesondere Fluor oder Chlor, oder -NHCN bedeutet oder für X⁵ steht; und
X⁵ für eine Gruppe der allgemeinen Formel (10) steht 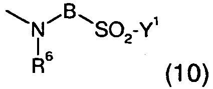 worin
R⁶ für Wasserstoff oder (C₁-C₄)-Alkyl, insbesondere Methyl, steht;
B für (C₂-C₆)-Alkylen, insbesondere Ethylen, durch ein Heteroatom, wie insbesondere -O-, unterbrochenes (C₂-C₆)-Alkylen oder Phenylen steht; und
Y¹ wie oben angegeben definiert ist.

Besonders bevorzugte faserreaktiven Reste aus der Reihe der Halogentriazine haben die nachfolgenden Formeln (9a) bis (9g) 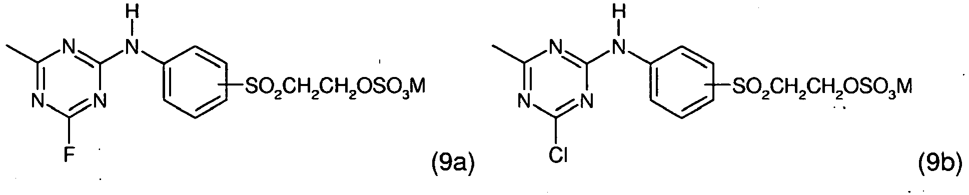 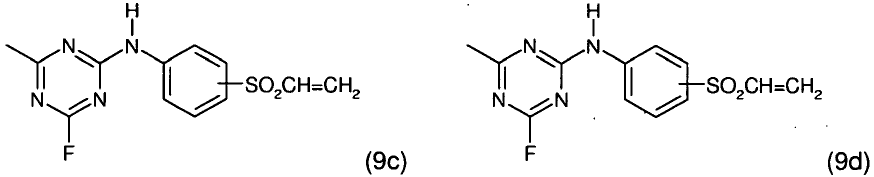 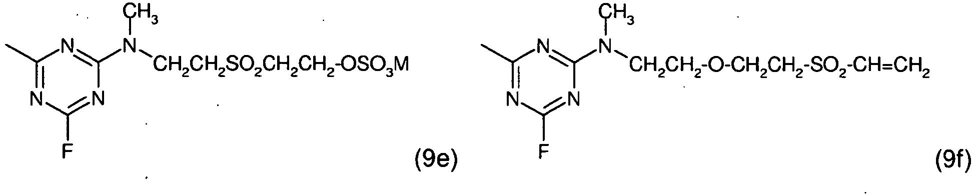 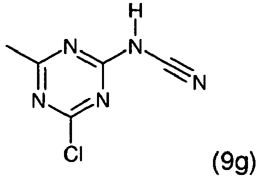 worin M wie oben angegeben definiert ist.

In der Regel liegen in den erfindungsgemäßen Farbstoffmischungen der Farbstoff der allgemeinen Formel (1) in einer Menge von 90 bis 10 Gew.%, bevorzugt 70 bis 30 Gew.% und besonders bevorzugt 60 bis 40 Gew.%, und mindestens ein Farbstoff, der aus den allgemeinen Formeln (2), (3) und (4) ausgewählt ist, in einer Menge von 10 bis 90 Gew.%, bevorzugt 30 bis 70 Gew.% und besonders bevorzugt 40 bis 60 Gew.%, bezogen auf die Gesamtfarbstoffmenge, vor.

Farbstoffe der allgemeinen Formeln (2) bis (4), die eine Gruppe -SO₂-Y¹ enthalten, können in Mischungen vorliegen, in denen sich die Einzelfarbstoffe nur in der Reaktivgruppe -SO₂-Y¹ unterscheiden. Bevorzugte Mischungen dieser Art enthalten z.B. einen Farbstoff der allgemeinen Formeln (2), (3) oder (4) mit Y = Vinyl und einen Farbstoff der allgemeinen Formeln (2), (3) oder (4) mit Y = ß-Sulfatoethyl. Dabei kann der Anteil des Farbstoffes in der Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu ß-ethylsubstituiertem Farbstoff im Molverhältnis zwischen 5:95 und 30:70. Die erfindungsgemäßen Farbstoffe der allgemeinen Formel (I), sowie die erfindungsgemäßen Farbstoffmischungen liegen in der Regel als Präparation in fester oder in flüssiger (gelöster) Form vor. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wässriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.
Bevorzugt liegen die erfindungsgemäßen Farbstoffe der allgemeinen Formel (I), sowie die erfindungsgemäßen Farbstoffmischungen als Farbstoffpulver oder als Farbstoffgranulat mit einem Gehalt von 10 bis 80 Gew.-%, bezogen auf das Pulver bzw. das Granulat, an einem Elektrolytsalz, das auch als Stellmittel bezeichnet wird, vor. Granulate weisen insbesondere Korngrößen von 50 bis 500 m auf. Diese festen Präparationen können zudem die erwähnten Puffersubstanzen in einer Gesamtmenge von bis zu 10 Gew.-%, bezogen auf die Präparation enthalten. Sofern die Farbstoffe bzw. Farstoffmischungen in wässriger Lösung vorliegen, so beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt. Die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffe der allgemeinen Formel (1) können hergestellt werden, indem man eine Monoazoverbindung der allgemeinen Formel (11). 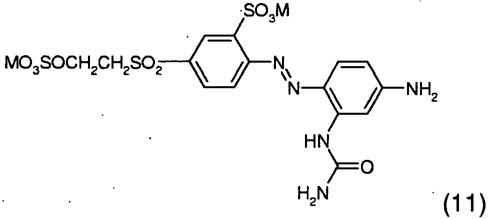 worin M wie oben angegeben definiert ist, mit einer Triazinverbindung der allgemeinen Formel (12) 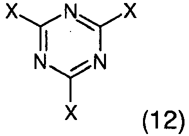 worin X wie oben angegeben definiert ist, acyliert und die erhaltene Verbindung der allgemeinen Formel (13) 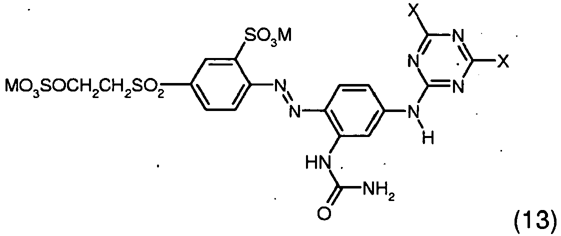 anschließend mit N-Methyl-taurin kondensiert.

Die Monoazoverbindung der allgemeinen Formel (11) ist aus der DE-A 4425222 bekannt und kann anlog den dort gemachten Angaben hergestellt werden.

Bei der Herstellung des erfindungsgemäßen Farbstoffes der allgemeinen Formel (1), worin X für Chlor steht, werden die Acylierung der Monoazoverbindung der Formel (11) mit Cyanurchlorid, sowie die nachfolgende Kondensation mit N-Methyltaurin bevorzugt im schwach sauren bis neutralen Bereich durchgeführt. Die Reaktionstemperatur für die Acylierung liegt normalerweise bei 20-40°C, diejenige für die Kondensation bei 50-60°C.

Der erfindungsgemäße Farbstoff der allgemeinen Formel (1), worin X für Fluor steht, wird bevorzugt hergestellt, indem die Monoazoverbindung der Formel (11) bei 0 bis -2°C im schwach sauren Bereich mit Cyanurfluorid acyliert wird und anschließend eine Kondensation mit N-Methyltaurin im neutralen bis schwach sauren Bereich und bei 20-25°C durchgeführt wird.

Die erfindungsgemäßen Farbstoffmischungen können durch mechanisches Mischen der Einzelfarbstoffe im gewünschten Gewichtsverhältnis erhalten werden. Dabei können die Einzelfarbstoffe in Form von Farbstoffpulvern oder Farbstofflösungen oder auch in Form von formulierten Handelsformen, also etwa als Pulver, Granulat oder Flüssigeinstellung, die übliche Hilfsmittel enthalten, eingesetzt werden.

Die Farbstoffe der allgemeinen Formeln (2) und (3) sind bekannt und beispielsweise in DE-A 3102287. US 5298607, EP 0 021 105 A1 und DE-A 1911427 beschrieben. Sie können analog den dort gemachten Angaben hergestellt werden. Auch Farbstoffe der allgemeinen Formel (4) sind zahlreich beschrieben und über Standardsynthese-methoden zugänglich.

Die erfindungsgemäßen Farbstoffe und Farbstoffmischungen können weitere faserreaktive Farbstoffe, die zum Nuancieren dienen, in einer Menge von bis zu 5 Gew.-%, bezogen auf die Gesamtfarbstoffmenge, enthalten. Diese "Nuancierfarbstoffe° können durch übliches Vermischen hinzugefügt oder auch auf chemischem Wege im selben Reaktionsansatz zusammen mit der Synthese eines erfindungsgemäßen Farbstoffes oder einer erfindungsgemäßen Farbstoffmischung hergestellt und in den Farbstoff oder die Farbstoffmischung eingebracht werden.

Die erfindungsgemäßen Farbstoffe und Farbstoffmischungen können zum Färben oder Bedrucken von hydroxy- und/oder carbonamidgruppenhaltigen Materialien eingesetzt werden und besitzen hier wertvolle anwendungstechnische Eigenschaften.

Die vorliegende Erfindung betrifft somit auch die Verwendung der erfindungsgemäßen Farbstoffe der allgemeinen Formel (1), sowie der erfindungsgemäßen Farbstoffmischungen zum Färben oder Bedrucken von hydroxy- und/oder carbonamidgruppenhaltigen Materialien bzw. Verfahren zum Färben oder Bedrucken solcher Materialien in an und für sich üblichen Verfahrensweisen

Hydroxy- und/oder carbonamidgruppenhaltige Materialien können beispielsweise in Form von Flächengebilden oder Folien, insbesondere aber in Form von Fasern vorliegen. Fasern wiederum sind bevorzugt Textilfasern, wie Gewebe oder Garne, die in Form von Strängen oder Wickelkörpern verwendet werden können.

Carbonamidgruppenhaltige Materialien sind beispielsweise natürliche und synthetische Polyamide und Polyurethane, wie etwa Wolle und andere Tierhaare, Seide, Leder, Polyamid-6,6, Polyamid-6, Polyamid-11 und Polyamid-4.
Bevorzugt sind hydroxygruppenhaltige Materialien natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide, sowie chemisch modifizierte Cellulosefasern, wie aminierte Cellulosefasern oder Fasern, wie sie beispielsweise in WO 96/37641 und WO 96/37642 sowie in EP-A-0 538 785 und EP-A-0 692 559 beschrieben sind.

Die erfindungsgemäßen Farbstoffe und Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte; beispielsweise im Verhältnis Ware zu Flotte von 1 : 5 bis 1 : 100, bevorzugt 1 : 6 bis 1 : 30, unter Verwendung von verschiedensten säurebindenden Mitteln und soweit erforderlich neutralen Salzen, wie Natriumchlorid oder Natriumsulfat, Färbungen mit sehr guten Farbausbeuten. Man färbt bevorzugt in wässrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln.
Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der erfindungsgemäßen Farbstoffe und der erfindungsgemäßen Farbstoffmischungen auf den Cellulosefasern bewirkenden Mittel sind beispielsweise wasserlösliche basische Salze der Alkalimetalle bzw. Erdalkali-metalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriu mtrichloracetat,
Trinatriumphosphat oder Wasserglas oder Mischungen derselben, wie beispielsweise Mischungen aus Natronlauge und Wasserglas.

Die erfindungsgemäßen Farbstoffe und Farbstoffmischungen zeichnen sich auf den Cellulosefasermaterialien bei Anwendung in den Färbe- und Druckverfahren durch eine hervorragende Farbstärke aus.
Die mit den erfindungsgemäßen Farbstoffen und Farbstoffmischungen erhältlichen Färbungen und Drucke besitzen klare Nuancen. Insbesondere weisen die Färbungen und Drucke auf Cellulosefasermaterialien eine gute Lichtechtheit und insbesondere gute Nassechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Nassechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch lässt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise der erfindungsgemäße Farbstoff oder aber die erfindungsgemäße Farbstoffmischung bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffe und Farbstoffmischungen sehr gut ist, lassen sie sich auch mit Vorteil bei üblichen kontinuierlichen Färbeverfahren einsetzen. Die Farbstärke der erfindungsgemäßen Farbstoffe und Farbstoffmischungen ist sehr hoch.

Die oben genannten Farbstoffe und Farbstoffmischungen können auch in Drucktinten für den digitalen Textildruck formuliert werden.

Die vorliegende Erfindung betrifft somit auch Drucktinten, die dadurch gekennzeichnet sind, das sie einen erfindungsgemäßen Farbstoff der allgemeinen Formel (1) oder eine erfindungsgemäße Farbstoffmischung enthält.

Derartige Drucktinten enthalten die erfindungsgemäßen Farbstoffe der allgemeinen Formel (1) bzw. die erfindungsgemäßen Farbstoffmischungen beispielsweise in Mengen von 0,1 Gew.-% bis 50 Gew.-%, bevorzugt in Mengen von 1 Gew.-% bis 30 Gew.-% und besonders bevorzugt in Mengen von 1 Gew.-% bis 15 Gew.-%, bezogen auf das Gesamtgewicht der Tinte.
Für den Einsatz der Tinten im Continuous flow Verfahren kann durch Elektrolytzusatz eine Leitfähigkeit von 0,5 bis 25 mS/m eingestellt werden. Als Elektrolyt eignen sich beispielsweise Lithiumnitrat und Kaliumnitrat.

Die genannten Drucktinten können organische Lösungsmittel mit einem Gesamtgehalt von 1-50%, bevorzugt von 5-30 Gew.-%, bezogen auf das Gesamtgewicht der Tinte, enthalten.
Geeignete organische Lösungsmittel sind beispielsweise Alkohole, z. B. Methanol, Ethanol, 1-Propanol, Isopropanol, 1-Butanol, tert. Butanol, Pentylalkohol, mehrwertige Alkohole z. B.: 1,2-Ethandiol, 1,2,3-Propantriol, Butandiol, 1,3- Butandiol, 1,4-Butandiol, 1,2-Propandiol, 2,3-Propandiol, Pentandiol, 1,4-Pentandiol, 1,5-Pentandiol, Hexandiol, D,L-1,2-Hexandiol, 1,6-Hexandiol, 1,2,6-Hexantriol, 1,2- Octandiol,
Polyalkylenglykole, z. B. Polyethylenglykol, Polypropylenglykol, Alkylenglykole mit 2 bis 8 Alkylengruppen, z. B.: Monoethylenglykol, Diethylenglykol, Triethylenglykol, Tetraethylenglykol, Thioglykol, Thiodiglykol, Butyltriglykol, Hexylenglykol, Propylenglykol, Dipropylenglykol, Tripropylenglykol, niedrige Alkylether mehrwertiger Alkohole, z. B. Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykolmonohexylether, Triethylenglykolmonomethylether, Triethylenglykolmonobutylether, Tripropylenglykolmonomethylether, Tetraethylenglykolmonomethylether, Tetraethylenglykolmonobutylether, Tetraethylenglykoldimethylether, Propylenglykolmonomethylether, Propylenglykolmonoethylether, Propylenglykolmonobutylether, Tripropylenglykolisopropylether, Polyalkylenglykolether, wie z. B.: Polyethylenglokolmonomethylether, Polypropylenglykolglycerolether, Polyethylenglykoltridecylether, Polyethylenglykolnonylphenylether, Amine, wie z. B.: Methylamin, Ethylamin, Triethylamin, Diethylamin, Dimethylamin, Trimethylamin, Dibutylamin, Diethanolamin, Triethanolamin, N-Acetylethanolamin, N-Formylethanolamin, Ethylendiamin, Harnstoffderivate, wie z. B. Harnstoff, Thioharnstoff, N-Methylharnstoff, N,N'- epsilon Dimethylharnstoff, Ethylenharnstoff, 1,1,3,3-Tetramethylharnstoff, Amide, wie z. B. Dimethylformamid, Dimethylacetamid, Acetamid, Ketone oder Ketoalkohole, wie z. B. Aceton, Diacetonalkohol, cyclische Ether, wie z. B. Tetrahydrofuran, Trimethylolethan, Trimethylolpropan, 2- Butoxyethanol, Benzylalkohol, 2-Butoxyethanol, Gamma-butyrolacton, epsilon -Caprolactam, ferner Sulfolan, Dimethylsulfolan, Methylsulfolan, 2,4-Dimethylsulfolan, Dimethylsulfon, Butadiensulfon, Dimethylsulfoxid, Dibutylsulfoxid, N-Cyclohexyl-Pyrrolidon, N- Methyl-2-Pyrrolidon, N-Ethyl-Pyrrolidon, 2-Pyrrolidon, 1-(2-Hydroxyethyl)-2- Pyrrolidon, 1-(3-Hydroxypropyl)-2-Pyrrolidon, 1,3-Dimethyl-2-imidazolidinon, 1,3- Dimethyl-2-imidazolinon, 1,3-Bismethoxymethylimidazolidin, 2-(2- Methoxyethoxy)ethanol, 2-(2-Ethoxyethoxy)ethanol, 2-(2-Butoxyethoxy)ethanol, 2- (2-Propoxyethoxy)ethanol, Pyridin, Piperidin, Butyrolacton, Trimethylpropan, 1,2- Dimethoxypropan, Dioxan, Ethylacetat, Ethylendiamintetraacetat, Ethylpenthylether, 1,2-Dimethoxypropan und Trimethylpropan.

Weiterhin können die genannten Drucktinten die üblichen Zusatzstoffe enthalten, wie beispielsweise Viskositätsmoderatoren um Viskositäten im Bereich von 1,5 bis 40,0 mPa.s in einem Temperaturbereich von 20 bis 50 °C, einzustellen. Bevorzugte Tinten haben eine Viskosität von 1,5 bis 20 mPas und besonders bevorzugte Tinten haben eine Viskosität von 1,5 bis 15 mPas.
Als Viskositätsmoderatoren eignen sich rheologische Additive beispielsweise: Polyvinylcaprolactam, Polyvinylpyrrolidon sowie deren Co-Polymere Polyetherpolyol, Assoziativverdicker, Polyharnstoff, Polyurethan, Natriumalginate, modifizierte Galaktomannane, Polyetherharnstoff, Polyurethan, nichtionogene Celluloseether.

Als weitere Zusätze können die genannten Drucktinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.
Als oberflächenaktive Substanzen eignen sich beispielsweise: Tenside aller Art, bevorzugt nichtionogene Tenside, Butyldiglykol, 1,2 Hexandiol.

Weiterhin können die genannten Drucktinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.

Die genannten Drucktinten können in üblicher Weise durch Mischen der Komponenten in Wasser hergestellt werden.

Die genannten Drucktinten eignen sich für den Einsatz in Tintenstrahldruckverfahren zum Bedrucken der verschiedensten vorpräparierten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemässen Drucktinten sind auch zum Bedrucken von vorbehandelten hydroxygruppenhaltigen bzw. aminogruppenhaltigen Fasern geeignet, die in Mischgeweben enthalten sind, z. B. von Gemischen aus Baumwolle, Seide, Wolle mit Polyesterfasern oder Polyamidfasern.

Im Gegensatz zum konventionellen Textildruck, bei dem die Druckfarbe bereits sämtliche Fixierchemikalien und Verdickungsmittel für einen Reaktivfarbstoff enthält, müssen beim Ink-Jet-Druck die Hilfsmittel in einem separaten Vorbehandlungsschritt auf das textile Substrat aufgebracht werden.
Die Vorbehandlung des textilen Substrates, wie zum Beispiel Cellulose- und Celluloseregeneratfasern sowie Seide und Wolle - erfolgt vor dem Bedrucken mit einer wässrigen alkalischen Flotte. Zur Fixierung von Reaktivfarbstoffen benötigt man Alkali, beispielsweise Natriumcarbonat, Natriumbicarbonat, Natriumacetat, Trinatriumphosphat, Natriumsilikat, Natriumhydroxid, Alkalispender wie zum Beispiel Natriumchloracetat, Natriumformiat, hydrotrope Substanzen wie zum Beispiel Harnstoff, Reduktionsinhibitoren, wie zum Beispiel Natriumnitrobenzolsulfonate, sowie Verdickungsmittel, die das Fliessen der Motive beim Aufbringen der Druckfarbe verhindern, dies sind beispielsweise Natriumalginate, modifizierte Polyacrylate oder hochveretherte Galaktomahnane.
Diese Reagenzien zur Vorpräparierung werden mit geeigneten Auftragsgeräten, beispielsweise mit einem 2- oder 3-Walzenfoulard, mit berührungslosen

Sprühtechnologien, mittels Schaumauftrag oder mit entsprechend angepassten Ink- Jet Technologien in definierter Menge gleichmäßig auf das textile Substrat aufgebracht und anschließend getrocknet. Nach dem Bedrucken wird das textile Fasermaterial bei 120 bis 150 °C getrocknet und anschließend fixiert.
Die Fixierung der Ink-Jet-Drucke kann erfolgen bei Raumtemperatur, oder mit Sattdampf, mit überhitztem Dampf, mit Heißluft, mit Mikrowellen, mit Infrarotstrahlung, mit Laser- oder Elektronenstrahlen oder mit anderen geeigneten Energieübertragungsarten.

Man unterscheidet ein- und zweiphasige Fixierungsprozesse. Bei der einphasigen Fixierung befinden sich die zur Fixierung notwendigen Chemikalien bereits auf dem textilen Substrat. Bei der zweiphasigen Fixierung kann diese Vorbehandlung unterbleiben. Zur Fixierung wird nur Alkali benötigt, das nach dem Ink-Jet-Druck vor dem Fixierprozess ohne Zwischentrocknung aufgebracht wird. Auf weitere Zusätze wie Harnstoff oder Verdickungsmittel kann verzichtet werden.

Im Anschluss an die Fixierung wird die Drucknachbehandlung durchgeführt, die die Voraussetzung für gute Echtheiten, hohe Brillanz und einen einwandfreien Weißfond ist. Die mit den genannten Drucktinten hergestellten Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

Eine Suspension aus 800 Teilen Wasser und 114 Teilen der Monoazoverbindung der Formel (11), worin M für Natrium steht, wird mit Natriumcarbonat auf den pH-Wert 5 gestellt. Anschließend werden 36,9 Teile Cyanurchlorid eingetragen und der Ansatz 2 Stunden bei Raumtemperatur gerührt, wobei der pH-Wert 5,5 bis 6,0 mit Natriumcarbonat gehalten wird. Zur vollständigen Umsetzung wird auf 35-40°C erwärmt und 90 Minuten bei pH 5,5-6,0 nachgerührt.
In die erhaltene Suspension werden 81,2 Teile einer neutralen, 35%igen Lösung von N-Methyltaurin gegeben. Es wird noch 8 Stunden bei 50-60°C gerührt, wobei der pH-Wert 5-6 durch Zugabe von Natriumcarbonat gehalten wird.
Nach Aufarbeitung der Syntheselösung erhält man die elektrolythaltige Verbindung der Formel (1 a) 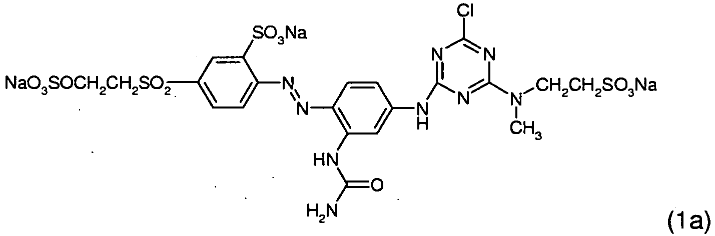 die sehr gute Farbstoffeigenschaften besitzt und nach den für faserreaktive Farbstoffe üblichen Applikations- und Fixiermethoden beispielsweise auf Baumwolle kräftige rotstichig gelbe Färbungen und Drucke von guten Licht- und Nassechtheitseigen-schaften liefert. Die hohe Farbstärke dieser Färbungen ist hier besonders hervorzuheben.

### Beispiel 2

Eine mit Natriumcarbonat auf pH 7 gestellte Lösung aus 2000 Teilen Wasser und 114 Teilen der Monoazoverbindung der Formel (11), worin M für Natrium steht, wird bei 0°C innerhalb von 20 Minuten mit 40,5 Teilen Cyanurfluorid versetzt. Den pH-Wert lässt man bis auf 6 abfallen und hält ihn dort durch Zugabe von Natriumcarbonat. Es wird noch 20 Minuten nachgerührt.

Anschließend werden 81,2 Teile einer neutralen, 35%igen wässrigen Lösung von N-Methyltaurin zugetropft. Es wird noch 4 Stunden bei pH 6,5 nachgerührt, wobei man langsam auf Raumtemperatur erwärmen lässt.
Nach Aufarbeitung der Syntheselösung erhält man die elektrolythaltige Verbindung der Formel (1 b) 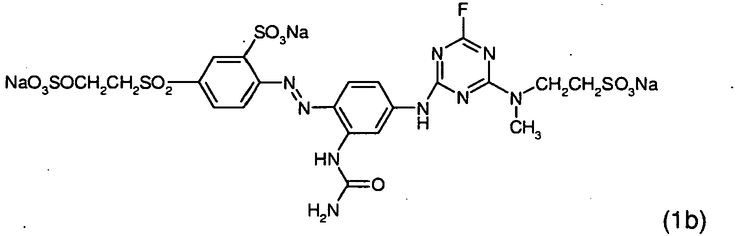 die sehr gute Farbstoffeigenschaften besitzt und nach den für faserreaktive Farbstoffe üblichen Applikations- und Fixiermethoden beispielsweise auf Baumwolle kräftige rotstichig gelbe Färbungen und Drucke von guten Licht- und Nassechtheitseigen-schaften liefert. Die hohe Farbstärke dieser Färbungen ist hier besonders hervorzuheben.

### Beispiel 3

1000 Teile einer wässrigen Syntheselösung mit 84 Teilen des Farbstoffes der Formel (1 a) und 1000 Teile einer wässrigen Syntheselösung mit 91 Teilen des Farbstoffes der Formel (2a) 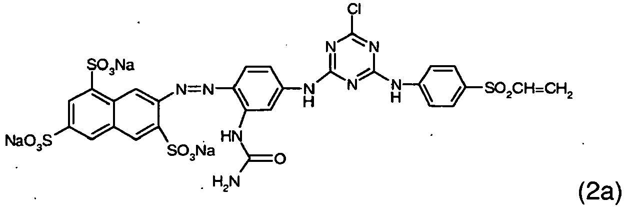 werden miteinander vermischt. Man isoliert die erfindungsgemäße Farbstoffmischung in einem molaren Mischungsverhältnis des Farbstoffes (1 a) zu Farbstoff (2a) von 50 : 50 aus der vereinigten Lösung durch Sprühtrocknung der Farbstofflösung. Die erhaltene Farbstoffmischung, die aus der Synthese stammende Elektrolytsalze, wie Natriumchlorid und Natriumsulfat, enthält, zeigt sehr gute färberische Eigenschaften und liefert beispielsweise auf cellulosischen Fasermaterialien, wie Baumwolle, oder Celluloseregeneratfasern in einem für faserreaktive Farbstoffe üblichen Auszieh-Färbeverfahren egale gelbe Färbungen, die eine sehr hohe Farbstärke besitzen.

### Beispiel 4

Man vermischt 1000 Teile einer wässrigen Syntheselösung mit 168 Teilen des Farbstoffes der Formel (1 a) mit 1000 Teilen einer wässrigen Syntheselösung mit 105 Teilen des Farbstoffes der Formel (3a) 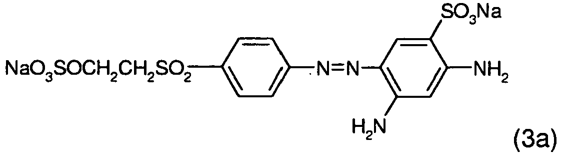 und isoliert die erhaltene Farbstoffmischung durch Sprühtrocknung der Farbstofflösung. Die erhaltene enthaltende Farbstoffmischung, die aus der Synthese stammende Elektrolytsalze, wie Natriumchlorid und Natriumsulfat, enthält mit einem molaren Mischungsverhältnis des Farbstoffes (1 a) zu Farbstoff (3a) von 50 : 50 zeigt sehr gute färberische Eigenschaften und liefert beispielsweise auf cellulosischen Fasermaterialien, wie Baumwolle, oder Celluloseregeneratfasern, in einem für faserreaktive Farbstoffe üblichen Klotz-Kaltverweil-Verfahren egale gelbe Färbungen, die eine sehr hohe Farbstärke besitzen.

### Beispiel 5

800 Teile einer wässrigen Lösung mit 40 Teilen des Farbstoffes der Formel (2b) 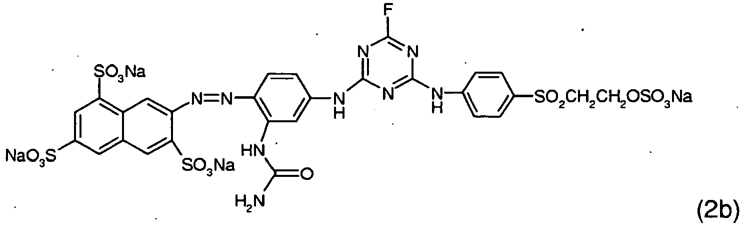 und 700 Teile einer wässrigen Lösung mit 49 Teilen des Farbstoffes der Formel (1 b) werden miteinander vermischt. Man isoliert eine Farbstoffmischung in einem molaren Mischungsverhältnis des Farbstoffes (2b) zu Farbstoff (1 b) von 40 : 60 aus der vereinigten Lösung durch Sprühtrocknung der Farbstofflösung. Die Farbstoffmischung, die aus der Synthese stammende Elektrolytsalze, wie Natriumchlorid und Natriumsulfat, enthält, zeigt sehr gute färberische Eigenschaften und liefert beispielsweise auf cellulosischen Fasermaterialien, wie Baumwolle, oder Celluloseregeneratfasern, in einem für faserreaktive Farbstoffe üblichen Auszieh-Färbeverfahren egale gelbe Färbungen, die eine sehr hohe Farbstärke besitzen.

### Beispiele 6 bis 40

In den nachfolgenden Beispielen sind weitere erfindungsgemäße Farbstoffmischungen mit den nachstehend genannten Farbstoffen beschrieben.

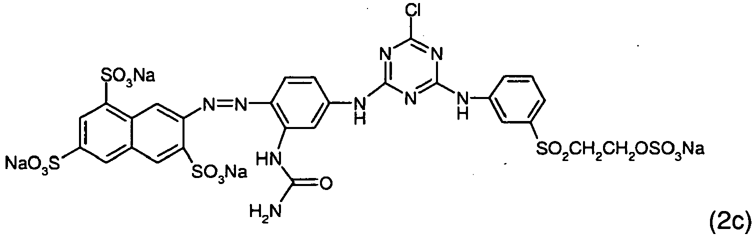

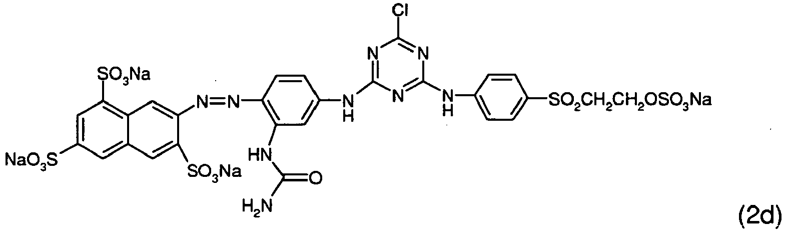

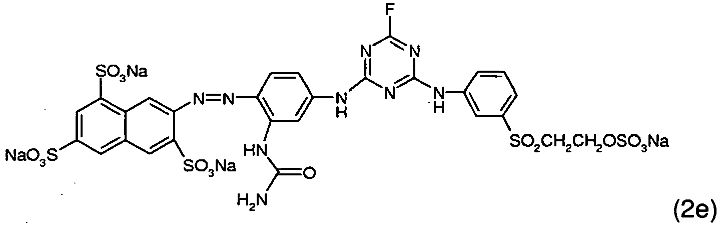

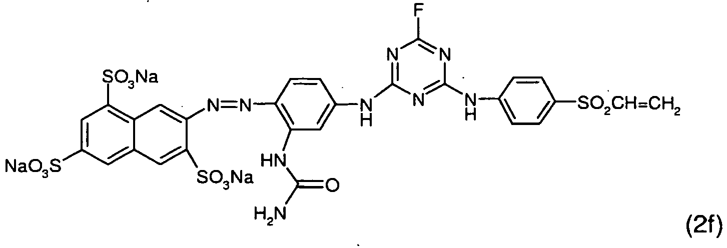

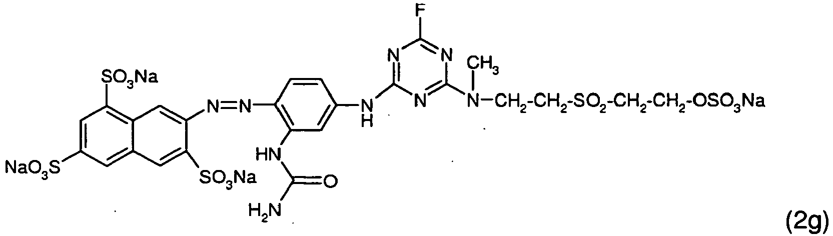

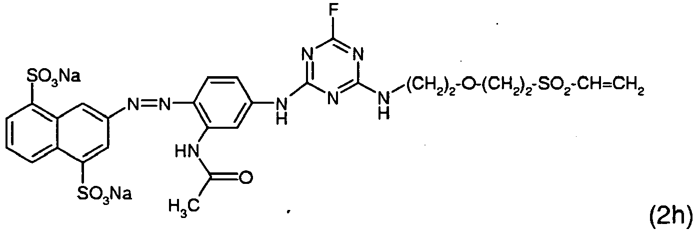

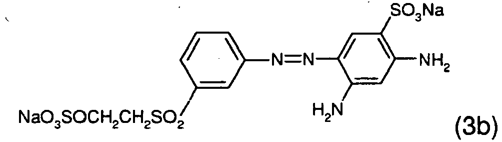

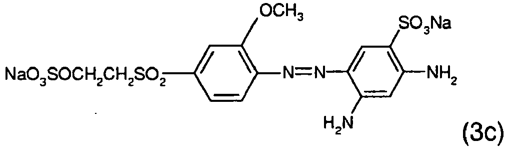

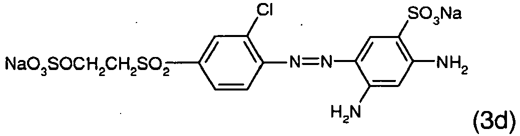

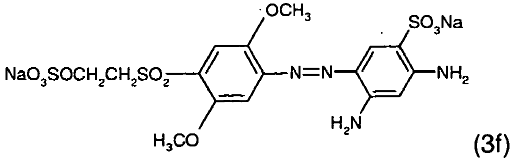

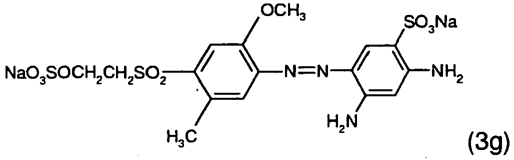

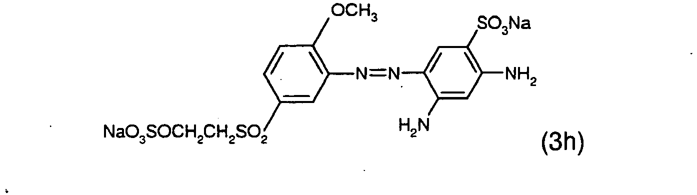

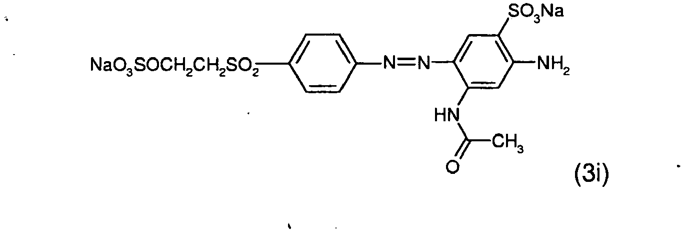

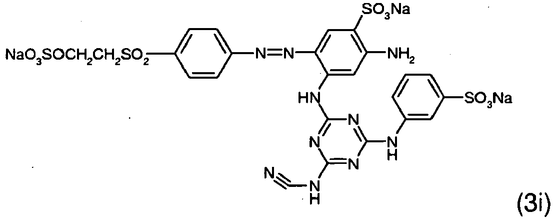

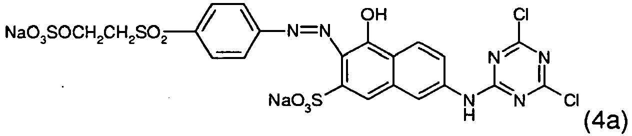

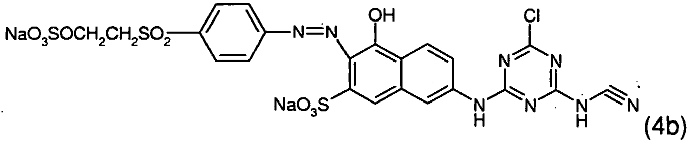

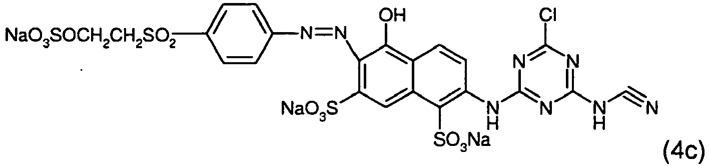

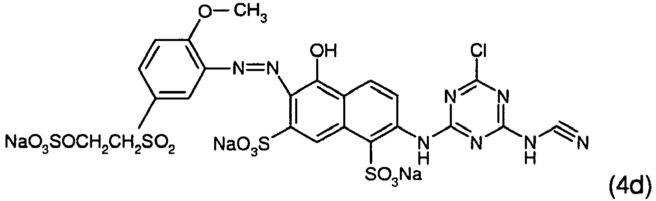

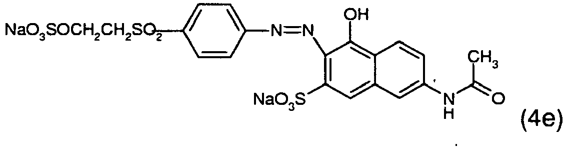

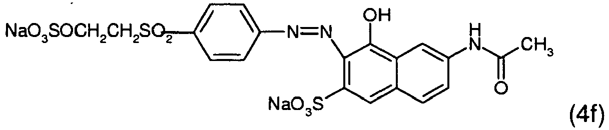

| Beispiel | Komponente I: Farbstoff der Formel (1) | Komponente I: Farbstoff der Formel (2), (3) oder (4) | Molverhältnis (I) : (II) |
|---|---|---|---|
| 6 | Formel (1a) | Formel (2b) | 50:50 |
| 7 | Formel (1a) | Formel (2c) | 60:40 |
| 8 | Formel (1a) | Formel (2d) | 50:50 |
| 9 | Formel (1a) | Formel (2e) | 75:25 |
| 10 | Formel (1a) | Formel (2f) | 50:50 |
| 11 | Formel (1a) | Formel (2g) | 50:50 |
| 12 | Formel (1a) | Formel (2h) | 50:50 |
| 13 | Formel (1a) | Formel (3b) | 70:30 |
| 14 | Formel (1a) | Formel (3c) | 65:35 |
| 15 | Formel (1a) | Formel (3d) | 60:40 |
| 16 | Formel (1a) | Formel (3f) | 60:40 |
| 17 | Formel (1a) | Formel (3g) | 50:50 |
| 18 | Formel (1a) | Formel (3h) | 50:50 |
| 19 | Formel (1a) | Formel (3i) | 75:25 |
| 20 | Formel (1a) | Formel (3j) | 60:40 |
| 21 | Formel (1a) | Formel (4a) | 20:80 |
| 22 | Formel (1a) | Formel (4b) | 15:85 |
| 23 | Formel (1a) | Formel (4c) | 20:80 |
| 24 | Formel (1a) | Formel (4d) | 20:80 |
| 25 | Formel (1a) | Formel (4e) | 20:80 |
| 26 | Formel (1a) | Formel (4f) | 20:80 |
| 27 | Formel (1b) | Formel (2a) | 60:40 |
| 28 | Formel (1b) | Formel (3a) | 60:40 |
| 29 | Formel (1b) | Formel (2c) | 50:50 |
| 30 | Formel (1b) | Formel (2d) | 50:50 |
| 31 | Formel (1b) | Formel (2f) | 75:25 |
| 32 | Formel (1b) | Formel (2h) | 60:40 |
| 33 | Formel (1b) | Formel (3b) | 65:35 |
| 34 | Formel (1b) | Formel (3i) | 50:50 |
| 35 | Formel (1b) | Formel (3i) | 50:50 |
| 36 | Formel (1b) | Formel (4a) | 20:80 |
| 37 | Formel (1b) | Formel (4b) | 15:85 |
| 38 | Formel (1b) | Formel (4c) | 20:80 |
| 39 | Formel (1b) | Formel (4d) | 15:85 |
| 40 | Formel (1b) | Formel (4e) | 20:80 |

Die Mischungen der Beispiele 6 bis 40 besitzen sehr gute anwendungstechnische Eigenschaften und liefern auf den in der Beschreibung genannten Materialien, wie insbesondere Cellulosefasermaterialien, nach den üblichen Anwendungsmethoden in der Färberei und Druckerei, vorzugsweise nach den üblichen Applikations- und Fixiermethoden für faserreaktive Farbstoffe gelbe Färbungen und Drucke mit einer hohen Farbstärke.

## Patentansprüche

1. Farbstoff der allgemeinen Formel (1) 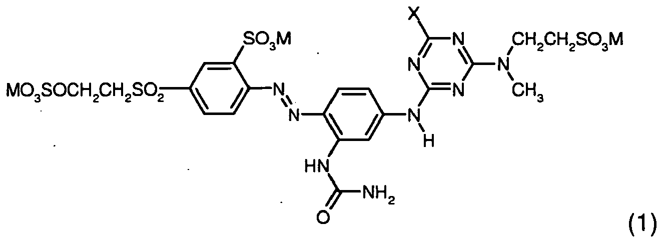 worin
M Wasserstoff oder ein Alkalimetall und
X Chlor oder Fluor
bedeuten.

2. Farbstoffmischung, enthaltend einen oder mehrere der Farbstoffe der allgemeinen Formel (1) gemäß Anspruch 1, sowie einen oder mehrere weitere faserreaktive Farbstoffe.

3. Farbstoffmischung gemäß Anspruch 2, enthaltend einen oder mehrere der Farbstoffe der allgemeinen Formel (1), sowie mindestens einen Farbstoff, der aus den allgemeinen Formeln (2), (3) und (4) ausgewählt ist 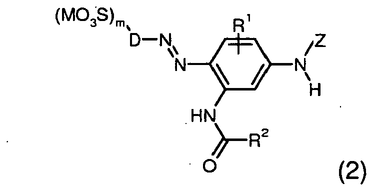 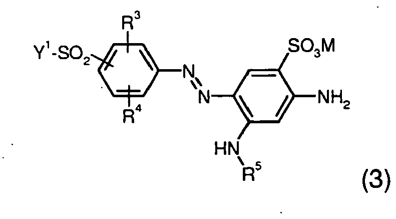 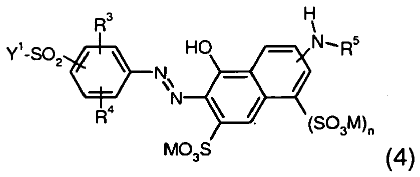 worin
D für den Rest des Benzols oder Naphthalins steht;
R¹ Wasserstoff, (C₁-C₄)-Alkyl, (C₁-C₄)-Alkoxy oder -SO₃M bedeutet;
R² Amino, (C₁-C₄)-Alkyl oder durch -COOM, -SO₃M oder -SO₂-Y¹ substituiertes (C₁-C₄)-Alkyl bedeutet;
R³ Wasserstoff, Chlor, (C₁-C₄)-Alkyl, (C₁-C₄)-Alkoxy oder -SO₃M bedeutet;
R⁴ Wasserstoff, (C₁-C₄)-Alkyl oder (C₁-C₄)-Alkoxy bedeutet;
R⁵ Wasserstoff oder -CO-R² bedeutet oder eine der Bedeutungen von Z hat;
Y¹ für Vinyl oder Ethyl, das in ß-Stellung durch einen alkalisch eliminierbaren Substituenten substituiert ist, steht;
Z für einen faserreaktiven Rest aus der Reihe der Halogenpyrimidine, der Dichlorchinoxaline oder der Halogentriazine steht;
m für 1, 2 oder 3 steht;
n für 0 oder 1 steht; und
M wie oben angegeben definiert ist.

4. Farbstoffmischung gemäß Anspruch 3, **dadurch gekennzeichnet, dass** die Gruppe (MO₃S)ₘ-D- in der allgemeinen Formel (2) die Gruppen der allgemeinen Formeln (5a) bis (5c), sowie der allgemeinen Formeln (7a) bis (7e) bedeutet

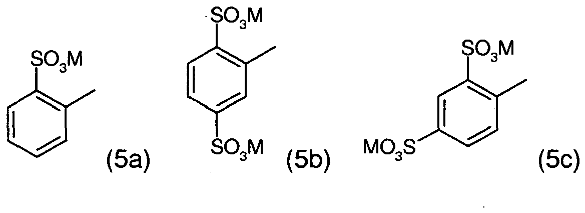

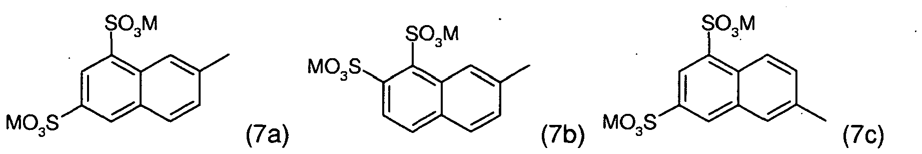

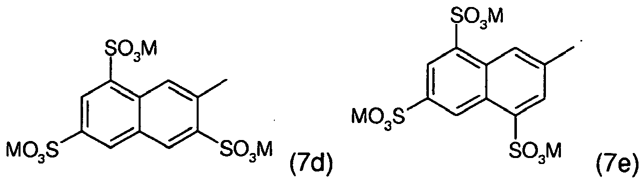

5. Farbstoffmischung gemäß Anspruch 3, **dadurch gekennzeichnet, dass** für Z stehende faserreaktiven Reste aus der Reihe der Halogentriazine die allgemeine Formel (9) 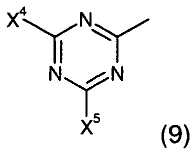 aufweisen, worin
X⁴ Halogen, wie insbesondere Fluor oder Chlor, oder -NHCN bedeutet oder für X⁵ steht; und
X⁵ für eine Gruppe der allgemeinen Formel (10) steht 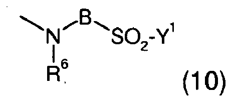 worin
R⁶ für Wasserstoff oder (C₁-C₄)-Alkyl, insbesondere Methyl, steht;
B für (C₂-C₆)-Alkylen, insbesondere Ethylen, durch ein Heteroatom, wie insbesondere -O-, unterbrochenes (C₂-C₆)-Alkylen oder Phenylen steht; und
Y¹ wie oben angegeben definiert ist.

6. Farbstoffmischung gemäß einem oder mehreren der Ansprüche 3 bis 5, **dadurch gekennzeichnet, dass** der Farbstoff der allgemeinen Formel (1) in einer Menge von 90 bis 10 Gew.%, und mindestens ein Farbstoff, der aus den allgemeinen Formeln (2), (3) und (4) ausgewählt ist, in einer Menge von 10 bis 90 Gew.%, bezogen auf die Gesamtfarbstoffmenge, vorliegt.

7. Verfahren zur Herstellung eines Farbstoffes der allgemeinen Formel (1), **dadurch gekennzeichnet, dass** man eine Monoazoverbindung der allgemeinen Formel (11) 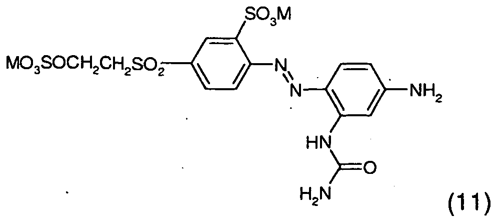 worin M wie oben angegeben definiert ist, mit einer Triazinverbindung der allgemeinen Formel (12) 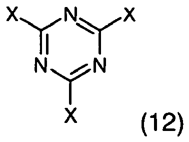 worin X wie oben angegeben definiert ist, acyliert und die erhaltene Verbindung der allgemeinen Formel (13) 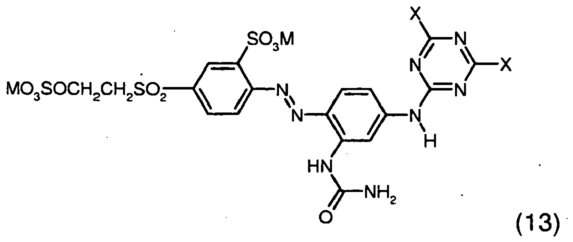 anschließend mit N-Methyl-taurin kondensiert.

8. Verfahren zur Herstellung einer Farbstoffmischung gemäß einem oder mehreren der Ansprüche 2 bis 6, **dadurch gekennzeichnet, dass** man die Einzelfarbstoffe im gewünschten Gewichtsverhältnis mechanisch mischt.

9. Verwendung eines Farbstoffes der allgemeinen Formel (1) gemäß Anspruch 1 oder einer Farbstoffmischung gemäß einem oder mehreren der Ansprüche 2 bis 6 zum Färben oder Bedrucken von hydroxy- und/oder carbonamidgruppenhaltigen Materialien.

10. Drucktinte, **dadurch gekennzeichnet, dass** sie einen Farbstoff der allgemeinen Formel (1) gemäß Anspruch 1 oder eine Farbstoffmischung gemäß einem oder mehreren der Ansprüche 2 bis 6 enthält.

## Claims

1. A dye of the general formula (1) 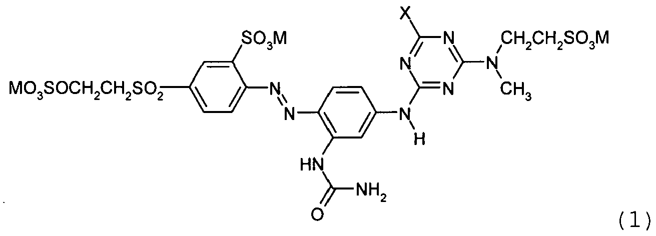 where
M is hydrogen or an alkali metal, and
X is chlorine or fluorine.

2. A dye mixture comprising one or more of the dyes of the general formula (1) according to claim 1 and also one or more further fiber-reactive dyes.

3. A dye mixture according to claim 2, comprising one or more of the dyes of the general formula (1) and also at least one dye selected from the general formulae (2), (3) and (4) 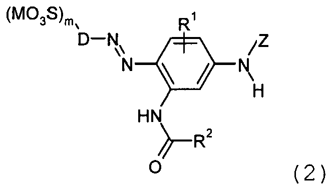 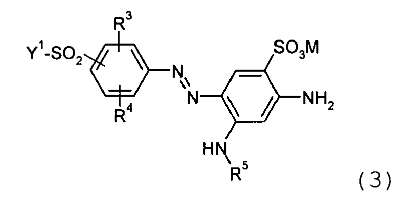 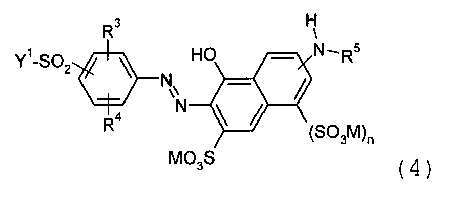 where
D is the radical of benzene or of naphthalene;
R¹ is hydrogen, (C₁-C₄)-alkyl, (C₁-C₄)-alkoxy or -SO₃M;
R² is amino, (C₁-C₄)-alkyl or (C₁-C₄)-alkyl substituted by -COOM, -SO₃M or -SO₂-Y¹;
R³ is hydrogen, chlorine, (C₁-C₄)-alkyl, (C₁-C₄)-alkoxy or -SO₃M;
R⁴ is hydrogen, (C₁-C₄)-alkyl or (C₁-C₄)-alkoxy;
R⁵ is hydrogen or -CO-R² or has one of the meanings of Z;
Y¹ is vinyl or is ethyl substituted by an alkali-eliminable substituent in the β position;
Z is a fiber-reactive radical from the series of the halopyrimidines, of the dichloroquinoxalines or of the halotriazines;
m is 1, 2 or 3;
n is 0 or 1; and
M is as defined above.

4. A dye mixture according to claim 3, wherein the group (MO₃S)ₘ-D- in the general formula (2) represents the groups of the general formulae (5a) to (5c) and also of the general formulae (7a) to (7e)

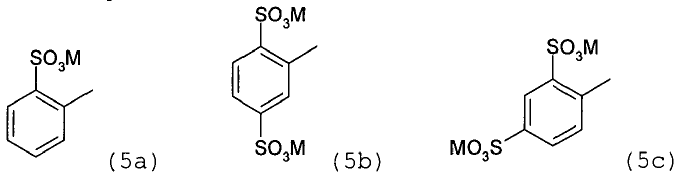

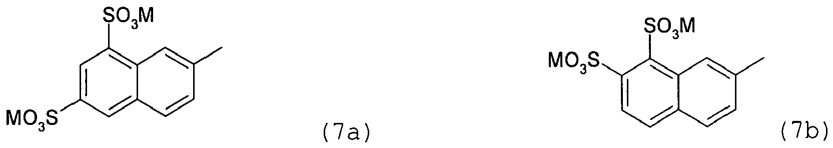

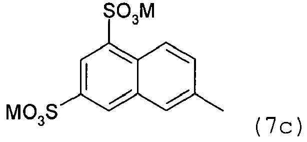

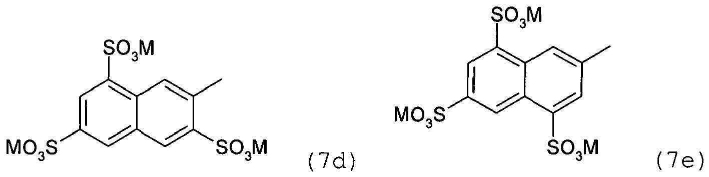

5. A dye mixture according to claim 3, wherein fiber-reactive radicals Z from the series of the halotriazines have the general formula (9) 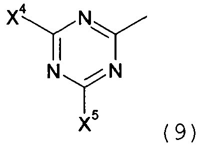 where
X⁴ is halogen, in particular fluorine or chlorine, or - NHCN or is X⁵; and
X⁵ is a group of the general formula (10) 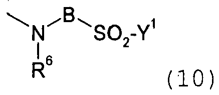 where
R⁶ is hydrogen or (C₁-C₄)-alkyl, in particular methyl;
B is (C₂-C₆)-alkylene, in particular ethylene, is (C₂-C₆)-alkylene interrupted by a heteroatom, in particular -O-, or is phenylene; and
Y¹ is as defined above.

6. A dye mixture according to one or more of claims 3 to 5, wherein the dye of the general formula (1) is present in an amount from 90% to 10% by weight and at least one dye selected from the general formulae (2), (3) and (4) is present in an amount from 10% to 90% by weight, all based on the total amount of dye.

7. A process for preparing a dye of the general formula (1), which comprises acylating a monoazo compound of the general formula (11) 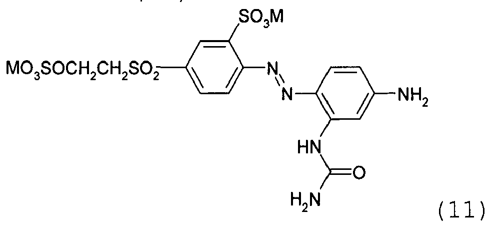 where M is as defined above, with a triazine compound of the general formula (12) 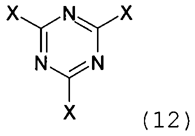 where X is as defined above, and then condensing the resulting compound of the general formula (13) 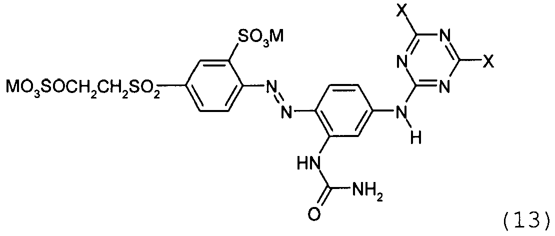 with N-methyltaurine.

8. A process for producing a dye mixture according to one or more of claims 2 to 6, which comprises the individual dyes being mechanically mixed in the desired weight ratio.

9. The use of a dye of the general formula (1) according to claim 1 or of a dye mixture according to one or more of claims 2 to 6, for dyeing or printing hydroxyl- and/or carboxamido-containing materials.

10. A printing ink comprising a dye of the general formula (1) according to claim 1 or a dye mixture according to one or more of claims 2 to 6.

## Revendications

1. Colorant de formule générale (1) 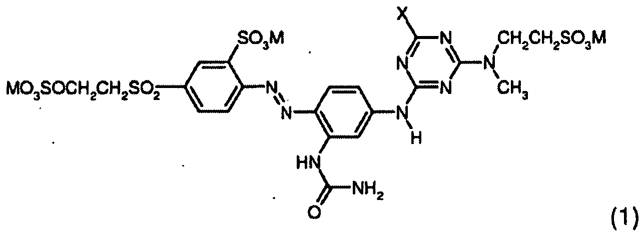 dans laquelle
M signifie l'hydrogène ou un métal alcalin, et
X signifie chlore ou fluor.

2. Mélange de colorants, contenant un ou plusieurs des colorants de formule générale (1) selon la revendication 1, ainsi qu'un ou plusieurs colorants réactifs avec les fibres supplémentaires.

3. Mélange de colorants selon la revendication 2, contenant un ou plusieurs des colorants de formule générale (1), ainsi qu'au moins un colorant choisi parmi les formules générales (2), (3) et (4) 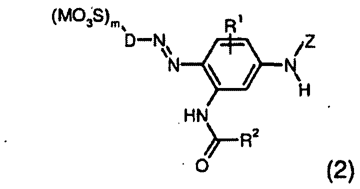 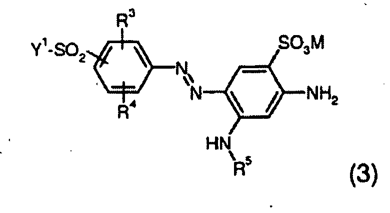 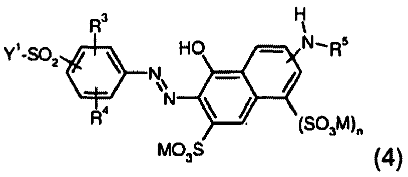 dans lesquelles
D représente le radical du benzène ou de la naphtaline ;
R¹ signifie hydrogène, alkyle en (C₁-C₄), alcoxy en (C₁-C₄) ou -SO₃M ;
R² signifie amino, alkyle en (C₁-C₉) ou alkyle en (C₁-C₄) substitué par -COOM, -SO₃M ou -SO₂-Y¹ ;
R³ signifie hydrogène, chlore, alkyle en (C₁-C₄), alcoxy en (C₁-C₄) ou -SO₃M ;
R⁴ signifie hydrogène, alkyle en (C₁-C₄) ou alcoxy en (C₁-C₄) ;
R⁵ signifie hydrogène ou -CO-R² ou a une des significations de Z ;
Y¹ représente vinyle ou éthyle, qui est substitué en position β par un substituant éliminable par voie alcaline ;
Z représente un radical réactif avec les fibres de la série des halogénopyrimidines, des dichloroquinoxalines ou des halogénotriazines ;
m représente 1, 2 ou 3 ;
n représente 0 ou 1 ; et
M est défini tel que précédemment.

4. Mélange de colorants selon la revendication 3, **caractérisé en ce que** le groupe (MO₃S)ₘ-D- dans la formule générale (2) signifie les groupes des formules générales (5a) à (5c), ainsi que des formules générales (7a) à (7e)

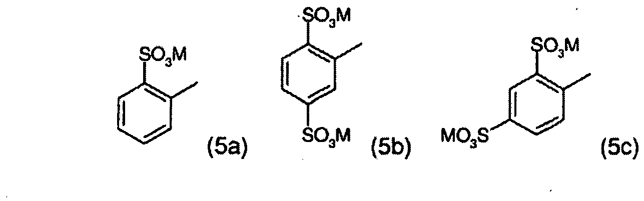

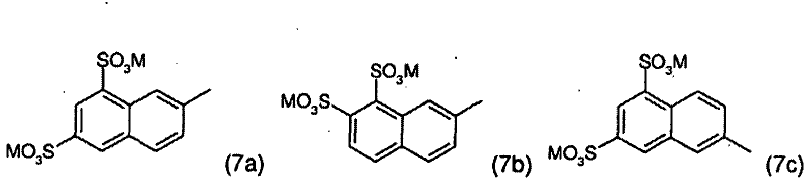

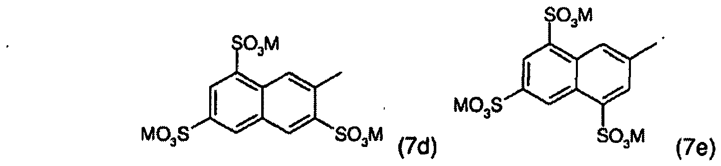

5. Mélange de colorants selon la revendication 3, **caractérisé en ce que** les radicaux réactifs avec les fibres de la série des halogénotriazines représentés par Z comprennent la formule générale (9) 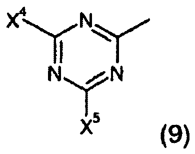 dans laquelle
X⁴ signifie halogène, tel que notamment fluor ou chlore, ou -NHCN ou représente X⁵ ;
et
X⁵ représente un groupe de formule générale (10) 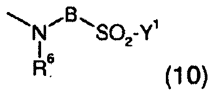 dans laquelle
R⁶ représente hydrogène ou alkyle en (C₁-C₄), notamment méthyle ;
B représente alkylène en (C₂-C₆), notamment éthylène, alkylène en (C₂-C₆) interrompu par un hétéroatome, tel que notamment -O-, ou phénylène ; et
Y¹ est défini tel que précédemment.

6. Mélange de colorants selon une ou plusieurs des revendications 3 à 5, **caractérisé en ce que** le colorant de formule générale (1) est présent en une quantité de 90 à 10 % en poids et au moins un colorant choisi parmi les formules générales (2), (3) et (4) est présent en une quantité de 10 à 90 % en poids, par rapport à la quantité totale de colorants.

7. Procédé de fabrication d'un colorant de formule générale (1), **caractérisé en ce qu'**un composé monoazo de formule générale (11) 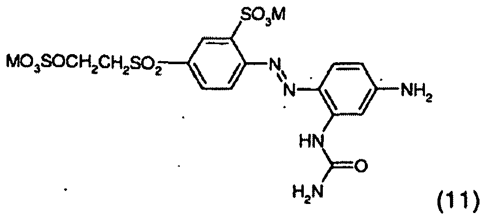 dans laquelle M est défini tel que précédemment, est acylé avec un composé de triazine de formule générale (12) 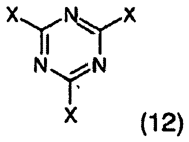 dans laquelle X est tel que défini précédemment, et le composé de formule générale (13) obtenu 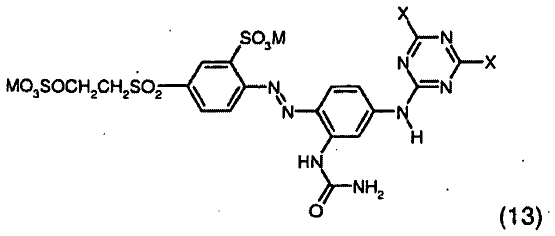 est ensuite condensé avec de la N-méthyl-taurine.

8. Procédé de fabrication d'un mélange de colorants selon une ou plusieurs des revendications 2 à 6, **caractérisé en ce que** les colorants individuels sont mélangés mécaniquement en le rapport en poids souhaité.

9. Utilisation d'un colorant de formule générale (1) selon la revendication 1 ou d'un mélange de colorants selon une ou plusieurs des revendications 2 à 6 pour la coloration ou l'impression de matériaux contenant des groupes hydroxy et/ou carbonamide.

10. Encre d'impression, **caractérisée en ce qu'**elle contient un colorant de formule générale (1) selon la revendication 1 ou un mélange de colorants selon une ou plusieurs des revendications 2 à 6.
